# Europäisches Patentamt

## European Patent Office

## Office européen des brevets

(19)

(11) Veröffentlichungsnummer: **0 111 832**
**B1**

(12)

# EUROPÄISCHE PATENTSCHRIFT

(45) Veröffentlichungstag der Patentschrift:
02.09.87

(21) Anmeldenummer: **83112288.2**

(22) Anmeldetag: **07.12.83**

(51) Int. Cl.⁴: **H 04 M 3/30,** H 04 B 3/23,
H 04 Q 11/04

(54) Schaltungsanordnung zur Fehlerortung bei einem digitalen Fernmelde-Teilnehmeranschluss.

(30) Priorität: 09.12.82 DE 3245588

(43) Veröffentlichungstag der Anmeldung:
27.06.84 Patentblatt 84/26

(45) Bekanntmachung des Hinweises auf die Patenterteilung:
02.09.87 Patentblatt 87/36

(84) Benannte Vertragsstaaten:
DE FR GB NL

(56) Entgegenhaltungen:
US-A-4 021 623

PROCEEDINGS - 1982 INTERNATIONAL SYMPOSIUM ON SUBSCRIBER LOOPS AND SERVICES, 20.-24. September 1982, Toronto, Canada, Seiten 50-54, IEEE, New York, USU.Thune u.a.:"Digital customer access for the Axe 10 system"

(73) Patentinhaber: Alcatel N.V., De Lairessestraat 153, NL- 1075 HK Amsterdam (NL)
(84) Benannte Vertragsstaaten: FR GB NL

(73) Patentinhaber: Standard Elektrik Lorenz Aktiengesellschaft, Hellmuth- Hirth- Strasse 42, D-7000 Stuttgart 40 (DE)
(84) Benannte Vertragsstaaten: DE

(72) Erfinder: Szechenyi, Kálmán, Bergstrasse 115, D-7151 Spielberg (DE)

(74) Vertreter: Beck- Seyffer, Karl Heinz, Dipl.- Ing., Standard Elektrik Lorenz AG Patent- und Lizenzwesen Postfach 30 09 29 Kurze Strasse 8, D-7000 Stuttgart 30 (DE)

**Beschreibung**

Die Erfindung betrifft eine Schaltungsanordnung zur Fehlerortung bei einem digitalen Fernmelde-Teilnehmeranschluß nach dem Oberbegriff des Hauptanspruchs.

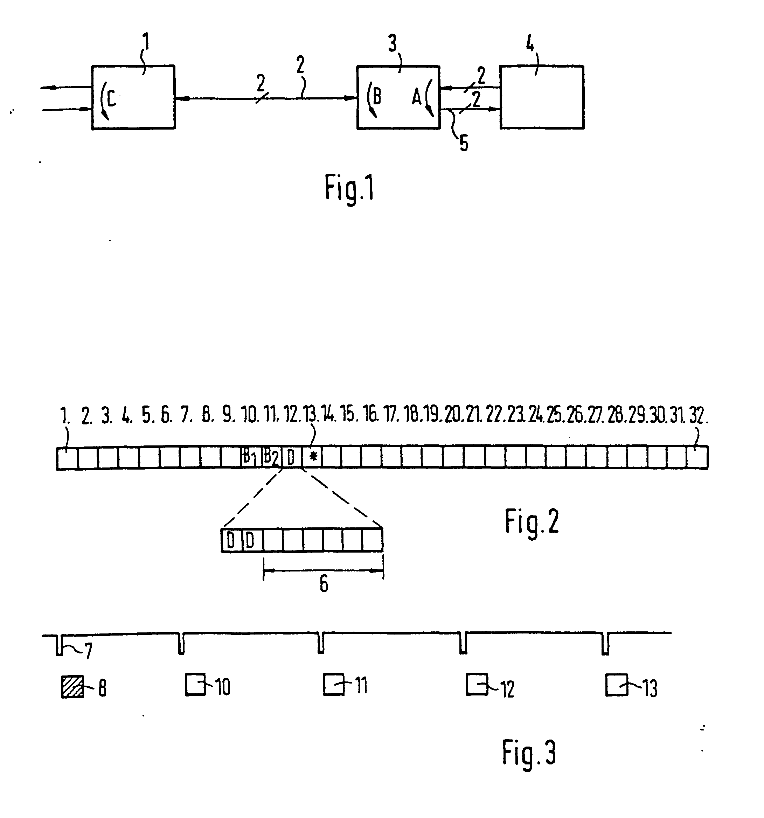

Für Fernmeldevermittlungsanlagen mit digitalen Verbindungen bis zu dem Teilnehmer sind von internationalen Gremien (CEPT) und Fernmeldeverwaltungen verschiedene Test- oder Prüfschleifen vorgeschlagen worden, die eine slebsttätige Ortung von Fehlerstellen ermöglichen (vergleiche auch die Beschreibung zur Figur 1). Mit diesen Prüfschleifen kann ein innerhalb der Vermittlungsstelle liegender Fehler geortet oder festgestellt werden, daß der Fehler außerhalb der Vermittlungsstelle liegt. Im letzteren Fall kann aber nicht festgestellt werden, ob die Teilnehmer-Anschlußleitung beschädigt ist oder ob die Teilnehmereinrichtung schadhaft ist. Es wäre aber für die Fernmeldeverwaltungen sehr nützlich, beide Fehlerarten unterscheiden zu können, da dadurch die Fehlerbeseitigung wesentlich erleichtert wird.

In "Proceedings - 1982 International Symposium on Subscriber Loops and Services, 20. - 24. September 1982" wird auf den Seiten 50 - 54 auch dieses Problem angesprochen. Unter Punkt 3.2.2 wird darauf hingewiesen, daß zur Fehlersuche Echotests verwendbar sind. Vorteilhaft wird hierzu ein Echokompensator mitverwendet, wenn ein solcher ohnehin vorhanden ist. Echokompensatoren als solche sind dem Fachmann geläufig, beispielsweise aus der US-A-4,021,623, in der einschließlich des darin genannten Standes der Technik vier verschiedene Echokompensatoren beschrieben sind.

Der Erfindung liegt die Aufgabe zugrunde, eine Schaltungsanordnung zur Durchführung des oben beschriebenen Verfahrens zu schaffen.

Diese Aufgabe wird durch eine Schaltungsanordnung nach der Lehre des Hauptanspruchs gelöst.

Vorteilhafte Fortbildungen der Erfindung sind in den weiteren Patentansprüchen gekennzeichnet.

Ein Ausführungsbeispiel der Erfindung wird im folgenden anhand der Zeichnung erläutert. Es zeigen:

Fig. 1 eine schematische Darstellung eines digitalen Teilnehmeranschlusses, aus der die verschiedenen Prüfschleifen ersichtlich sind;

Fig. 2 den Rahmenaufbau eines PCM-32-Systems, gemäß dem Signale und Daten zwischen der Vermittlungs-Abschlußschaltung und der Teilnehmer-Anschlußschaltung übertragen werden;

Fig. 3 die schematische Darstellung der Übertragung der Filterkoeffizienten in einem D-Kanal des PCM-Systems nach Fig. 2, und

Fig. 4 eine erfindungsgemäße Fehlerortungsschaltung.

Ein digitaler Teilnehmeranschluß (Fig. 1) weist im wesentlichen folgende Bestandteile auf:

- Eine Teilnehmereinrichtung 1 (international "network termination" genannt), die den teilnehmerseitigen Abschluß des digitalen Netzes darstellt. Teilnehmerseitig (d.h. in der Zeichnung nach links) können sich noch weitere Einrichtungen anschließen, die aber hier nicht dargestellt, da sie für die Erfindung ohne Bedeutung sind.

- Eine Teilnehmer-Anschlußleitung 2 ("subscriber line"), die üblicherweise zweidrähtig ausgeführt ist und auf der die Signale nach verschiedenen bekannten Verfahren zwischen dem Teilnehmer und der Vermittlungsstelle ausgetauscht werden. Im Rahmen der vorliegenden Erfindung wird eine Zwei-Draht-Duplex-Übertragung mit Echokompensation, die auch als Gleichlageverfahren bekannt ist, durchgeführt.

- Eine Leitungsabschlußschaltung 3 ("line termination"), die den vermittlungsseitigen Abschluß der Teilnehmer-Anschlußleitung darstellt.

- Eine Vermittlungsabschlußschaltung 4 ("exchange termination"), durch die mehrere Abschlußschaltungen 3 mit den Durchschalteeinrichtungen der Vermittlungsstelle verbunden sind. Mit der Abschlußschaltung 3 ist die Vermittlungsabschlußschaltung durch eine Vierdrahtleitung 5 verbunden.

Für folgende Prüfschleifen liegen internationale Normierungsvorschläge vor:

- Prüfschleife A: Die Schleife wird auf der der Vermittlungsstelle zugewandten Eingangsseite der Abschlußschaltung 3 durch einen Befehl, der automatisch erzeugt oder von einer Bedienungsperson eingegeben wird, geschlossen und ermöglicht die Prüfung der Vierdrahtleitung 5. Das Schließen der einzelnen Prüfschleifen ist in der Fig. 1 durch gekrümmte Pfeile angedeutet.

- Prüfschleife B: Wird auf der Ausgangsseite der Abschlußschaltung 3 geschlossen und ermöglicht eine Überprüfung der Funktion der Abschlußschaltung 3.

- Prüfschleife C: Wird auf der teilnehmerseitigen Ausgangsseite der Teilnehmereinrichtung 1 geschlossen und soll ein überprüfen der Funktionsfähigkeit der Teilnehmereinrichtung 1 ermöglichen.

Werden von der Vermittlungsstelle über die Prüfschleife C ausgesandte Daten nicht ordnungsgemäß wieder empfangen, so ist entweder die Anschlußleitung 2 fehlerhaft (z. B. Kurzschluß, Leerlauf, usw.), oder aber die Teilnehmereinrichtung 1 ist funktionsunfähig. Diese beiden möglichen Fehlerquellen können mit den Prüfschleifen nicht unterschieden werden, eine Unterscheidung wäre aber für die betreibende Fernmeldeverwaltung sehr erwünscht.

Um auf der zweidrähtigen Anschlußleitung 2 Nachrichten in beide Richtungen gleichzeitig und im gleichen Frequenzbereich (z. B. im Basisband) übertragen zu können, enthalten sowohl die Teilnehmereinrichtung 1 als auch die Abschlußschaltung 3 einen Echokompensator (siehe z. B. ntz Band 35 (1982) Heft 1, Seite 12 bis 15). Auch im Falle einer gestörten Prüfschleife C werden die Koeffizienten des Echokompensators in der Abschlußschaltung 3 laufend eingestellt, und zwar entsprechend der von der Anschlußleitung erhaltenen Impulsantwort. Aus den laufend eingestellten Filterkoeffizienten läßt sich aber der Zustand der Abschlußleitung 3 ermitteln. Frägt man die laufend eingestellten Koeffizienten ab und vergleicht sie mit Koeffizienten, die bei einwandfreier Teilnehmeranschlußleitung eingestellt und gespeichert worden sind, so läßt sich feststellen, ob die Teilnehmer-Anschlußleitung einwandfrei oder defekt ist. Damit kann bei einem über die Prüfschleife C festgestellten Fehler unterschieden werden, ob er von der schadhaften Anschlußleitung 2 oder von einer gestörten Teilnehmereinrichtung 1 verursacht wird. Wird die Echokompensation oder -löschung nur mittels eines Transversalfilters durchgeführt, so muß jeweils eine grössere Anzahl von Filterkoeffizienten gespeichert werden: z. B. 20 bis 40 Koeffizienten, jeweils mit einer Genauigkeit von 16 Bit. Zweckmäßiger ist es deshalb, den Echokompensator zumindest teilweise mit einem Rekursivfilter zu realisieren (vgl. DE-OS 31 20 434), da es dann genügt, nur einige wenige Rekursivfilter-Koeffizienten zu speichern.

Ein Rekursivfilter zweiten Grades läßt sich durch folgende Beziehung beschreiben

$$F(z^{-1}) = \frac{a_0 + a_1 z^{-1}}{1 - b_1 z^{-1} - b_2 z^{-2}}$$

darin sind:

$z = e^{j\Omega T}S$ die komplexe Frequenzvariable mit $T_S$ = Abtastperiode

$a_0$, $a_1$ die Koeffizienten des Zählerpolynoms

$b_1$, $b_2$ die Koeffizienten des Nennerpolynoms.

Bei einem solchen Filter genügt es, die zwei Koeffizienten $b_1$ und $b_2$ zu speichern, die die Polstellen der Filterfunktion bestimmen.

Auf der die Leitungsabschlußschaltung 3 mit der Vermittlungsabschlußschaltung 4 verbindenden Vierdrahtleitung 5 werden die digitalen Nachrichten gemäß dem PCM-Verfahren mit 32 Kanälen und einer Bitfolgefrequenz von 2,048 Mbit/s übertragen. Die 32 Kanäle eines PCM-Rahmens sind in Fig. 2 schematisch dargestellt.

Im digitalen Teilnehmeranschluß ist eine Nettobitfolgefrequenz oder -bitrate von 144 kbit/s, zu denen noch Synchronisierungsbits hinzukommen, normiert. Damit wird gebildet: ein transparenter Kanal $B_1$ mit 64 kbit/s, ein transparenter Kanal $B_2$ mit ebenfalls 64 kbit/s und ein Signalisierkanal D mit 16 kbit/s. Von den zur Verfügung stehenden 32 Kanälen werden für die Kanäle $B_1$ und $B_2$ zwei PCM-Kanäle und für den Kanal D lediglich 2 Bits in einem dritten PCM-Kanal belegt, wie dies in Fig. 2 angedeutet ist. Mit den restlichen sechs Bits 6 des dritten PCM-Kanals oder aber über einen vierten PCM-Kanal wird die Steuerinformation, die das Auslesen der Rekursivfilter-Koeffizienten des Echokompensators veranlaßt, von der Vermittlungsabschlußschaltung 4 an die Leitungsabschlußschaltung 3 übermittelt. Die jeweils mit 16 Bits wiedergegebenen Koeffizienten werden dann von der Leitungsabschlußschaltung 3 über den vierten PCM-Kanal zur Vermittlungsabschlußschaltung 4 gesendet. Sie können in einem in der Vermittlungsabschlußschaltung 4 enthaltenen Steuerrechner ausgewertet werden, oder aber zu dem Wartungsrechner der Vermittlungsstelle weitergeleitet und dort ausgewertet werden. Die Auswertung erfolgt im einfachsten Falle durch einen Vergleich. Übersteigt die Differenz zwischen den laufend eingestellten Koeffizienten und den abgespeicherten Koeffizienten einen vorgegebenen Wert, ist die Anschlußleitung 2 gestört.

In dem oberen Teil von Fig. 3 sind einige 8-kHz-Impulse 7 dargestellt, die zum Beispiel den PCM-Kanal Nr.13 markieren, in dem die Filterkoeffizienten übertragen werden. Zuerst wird ein die Koeffizienten charakterisierendes Kennwort 8 ausgesendet, das z. B. aus acht Nullbits besteht. Nach 125 μsec wird ein erstes Wort 10 übertragen, das aus den ersten acht Bits z. B. des Koeffizienten $c_1$ besteht. Ein zweites Wort 11, das die restlichen acht Bits des Koeffizienten $c_1$ enthält, folgt nach weiteren 125 μsec. Ein drittes Wort 12 enthält die ersten acht Bits des Koeffizienten $c_2$, und ein viertes Wort 13 enthält die restlichen acht Bits dieses Koeffizienten. Anschließend werden die nachfolgend eingestellten aktuellen Filterkoeffizienten übertragen.

Eine digitale Vermittlungsstelle 16, z. B. eine Ortsvermittlungsstelle des Systems 12, ist mit einer größeren Anzahl von Teilnehmergruppen-Anschlußschaltungen 17 versehen, von denen in der Zeichnung nur eine dargestellt ist. Jede Anschlußschaltung 17 enthält mehrere, zum Beispiel vier bis acht, Leitungsabschlußschaltungen 3, von denen zwei in der Zeichnung dargestellt sind. Sie sind jeweils über eine Vierdrahtleitung 5 mit einer Steuerschnittstellenschaltung 18 verbunden. Diese ist ihrerseits über eine Mehrfachleitung 19 mit der Vermittlungsstelle, d.h. insbesondere mit deren Durchschalteeinrichtungen, und durch ein Bussystem 20 mit einer Steuerschaltung 22, die im wesentlichen aus einem Mikrorechner besteht, sowie mit einem oder mehreren Schreib-Lesespeichern 23 verbunden.

Jede Leitungsabschlußschaltung 3 enthält einen, bereits erwähnten, Echokompensator 24 sowie einen Koeffizienten-Speicher 25, in den die bei ordnungsgemäßer Teilnehmer-Anschlußleitung 2 eingestellten Rekursivfilter-Koeffizienten eingeschrieben werden. Anstelle der Koeffizienten-Speicher 25 in den einzelnen Abschlußschaltungen 3 kann auch ein gemeinsamer Koeffizienten-Speicher 26 auf der Teilnehmergruppen-Anschlußschaltung 17 vorgesehen sein, der die Filterkoeffizienten sämtlicher Leitungsabschlußschaltungen 3 aufnimmt. Dieser gemeinsame Speicher kann aber auch einen Teil des Schreib-Lesespeichers 23 bilden.

Die Steuerschaltung 22 gibt die zum Durchführen der selbsttätigen Prüfverfahren erforderlichen Signale und Daten aus und wertet die empfangenen Signale aus. Stellt sie auf der Prüfschleife C einen Fehler fest, so ruft sie die in dem einzelnen Echokompensator jeweils laufend eingestellten Filterkoeffizienten ab und vergleicht sie mit denjenigen Filterkoeffizienten, die bei einwandfreier Teilnehmer-Anschlußleitung 2 eingestellt und gespeichert worden sind. Überschreitet der Unterschied zwischen den beiden Koeffizientengruppen die vorgegebenen Werte, so gibt die Steuerschaltung 22 ein Signal ab, das eine defekte Anschlußleitung signalisiert und das z. B. an eine Bedien- und Wartungseinrichtung 28 weitergeleitet wird. Diese enthält einen Wartungsrechner 29 und einen oder mehrere Speicher 30. Die Prüfverfahren können auch von dem Wartungsrechner 29 gesteuert werden, der in diesem Fall auch die Filterkoeffizienten auswertet. Dabei können diese Filterkoeffizienten auch in einem Teil des Speichers 30 oder in einem Zusatzspeicher abgelegt werden. Das Auswerten der Filterkoeffizienten kann auch in einer entweder von der Steuerschaltung 22 oder von dem Wartungsrechner 29 gesteuerten einfachen Vergleichsschaltung durchgeführt werden.

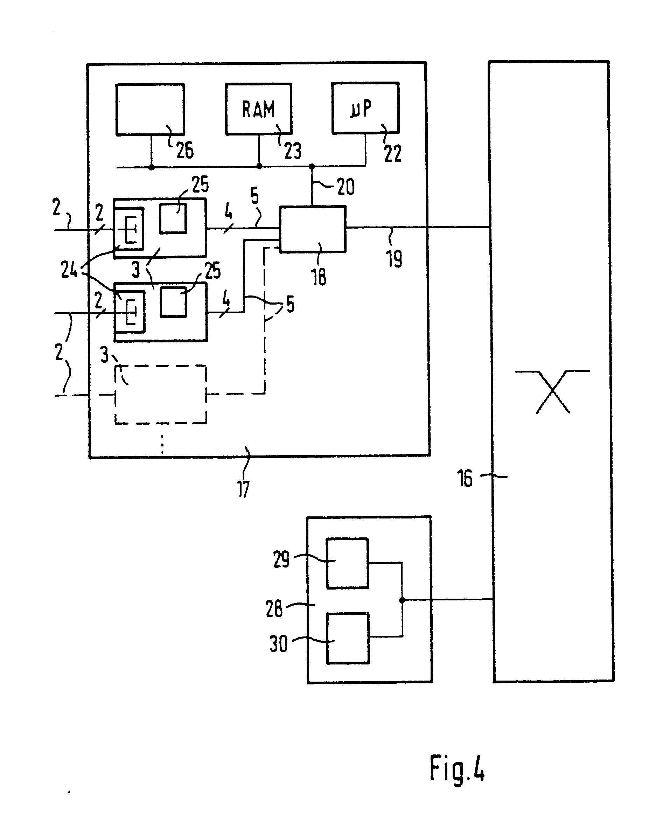

Die außer den Leitungs-Abschlußschaltungen 3 in der Teilnehmergruppen-Anschlußschaltung 17 enthaltenen weiteren Schaltungsbestandteile (vgl. Fig. 4) entsprechen der Vermittlungsabschlußschaltung 4 (vgl. Fig. 1).

Die Wirkungsweise des Verfahrens und der beschriebenen Schaltungsanordnung wird nachfolgend zusammengefaßt.

Zur Fehlerortung bei digitalen Fernmelde-Teilnehmeranschlüssen werden verschiedene Prüfschleifen A, B, C geschlossen und mit von der Vermittlungsstelle 16 ausgesandten Signalen überprüft. Stellt sich in der sogenannten C-Schleife heraus, daß ein Fehler vorliegt, kann nicht festgestellt werden, ob der Fehler auf der Anschlußleitung 2 oder in der Teilnehmereinrichtung 1 liegt. Um die beiden Fehlerquellen unterscheiden zu können, werden bei einwandfreier Anschlußleitung 2 die Filterkoeffizienten, die in einem in dem Echokompensator 24 der Teilnehmergruppen-Anschlußschaltung 17 enthaltenen Rekursivfilter laufend eingestellt werden, abgespeichert. Da bei fehlerhafter Anschlußleitung 2 der Echokompensator 24 auf Grund der von ihr erhaltenen Impulsantwort geänderte Filterkoeffizienten einstellt, kann durch einen Vergleich der laufenden Koeffizienten mit den abgespeicherten Koeffizienten der Fehlerort lokalisiert werden.

**Patentansprüche**

1. Schaltungsanordnung zur Fehlerortung bei einem digitalen Fernmelde-Teilnehmeranschluß, der eine vermittlungsseitige Leitungsabschlußschaltung (3) mit darin enthaltenem Echokompensator, eine Teilnehmer-Anschlußleitung (2) und eine Teilnehmereinrichtung (1) aufweist, in der eine Prüfschleife geschlossen und mit von der Vermittlungsstelle ausgesendeten Signalen überprüft wird,
dadurch gekennzeichnet, daß der Echokompensator (24) ein adaptives Digitalfilter aufweist, dem ein Speicher (23, 25, 26, 30) zugeordnet ist, in den Filterkoeffizienten eingeschrieben werden, die bei fehlerfreiem Zustand der Teilnehmer-Anschlußleitung (2) eingestellt worden sind, und daß in einer Auswerteschaltung (22, 29), der die gespeicherten und die neu eingestellten Filterkoeffizienten zugeführt werden, festgestellt wird, ob die Teilnehmer-Anschlußleitung (2) fehlerhaft ist.

2. Schaltungsanordnung nach Anspruch 1, dadurch gekennzeichnet, daß das Digitalfilter des Echokompensators (24) ein Rekursivfilter aufweist.

3. Schaltungsanordnung nach Anspruch 1, dadurch gekennzeichnet, daß das Digitalfilter des Echokompensators (24) ein Transversalfilter aufweist.

4. Schaltungsanordnung nach einem der Ansprüche 1 bis 3, dadurch gekennzeichnet, daß der Speicher (23, 26) und/oder die Auswerteschaltung (22) in einer Teilnehmergruppen-Anschlußschaltung (17) angeordnet sind.

5. Schaltungsanordnung nach einem der Ansprüche 1 bis 3, dadurch gekennzeichnet, daß der Speicher (25) in der vermittlungsseitigen Leitungsabschlußschaltung (3) enthalten ist.

6. Schaltungsanordnung nach einem der Ansprüche 1 bis 3, dadurch gekennzeichnet, daß der Speicher (30) und die Auswerteschaltung (29) in einer Bedien- und Wartungseinrichtung (28) enthalten sind.

**Claims**

1. A circuit for locating faults in a digital telecommunication subscriber termination comprising an exchange-side line termination circuit (3) with an echo canceller contained therein, a subscriber line (2) and a network termination (1), in which circuit a test loop is closed and is tested with signals transmitted by the exchange,
characterized in that the echo canceller (24) contains an adaptive digital filter to which there is assigned a memory (23, 25, 25, 30) into which filter coefficients which have been adjusted in the faultless state of the subscriber line (2) are written, and that, in an evaluating circuit (22, 29) to which the stored and the newly adjusted filter coefficients are fed, it is detected whether the subscriber line (2) is faulty.

2. A circuit as claimed in Claim 1, characterized in that the digital filter of said echo canceller (24) comprises a recursive filter.

3. A circuit as claimed in Claim 1, characterized in that the digital filter of said echo canceller (24) comprises a transversal filter.

4. A circuit as claimed in any one of Claims 1 to 3, characterized in that the memory (23, 26) and/or said evaluating circuit (22) are incorporated in a subscriber group circuit (17).

5. A circuit as claimed in any one of Claims 1 to 3, characterized in that said memory (25) is contained in the line termination (3) on the exchange side.

6. A circuit as claimed in any one of Claims 1 to 3, characterized in that the memory (30) and said evaluating circuit (29) are contained in a control and maintenance unit (28).

## Revendications

1. Agencement de circuit pour la localisation de défaut sur une jonction d'abonné pour télécommunications numériques comprenant un équipement terminal de ligne côté central (3) comportant un annuleur d'écho, une ligne d'abonné (2) et un équipement terminal de réseau (1), dans lequel une boucle de test est établie et vérifiée à l'aide de signaux transmis par le central, caractérisé en ce que l'annuleur d'écho (24) comporte un filtre numérique adaptatif auquel est affectée une mémoire (23, 25, 26, 30) dans laquelle sont enregistrés des coefficients de filtre qui ont été déterminés lorsque la ligne d'abonné (2) était exempte de défaut et en ce qu'un circuit d'évaluation (22, 219), auquel sont fournis des coefficients de filtre enregistrés et des coefficients de filtre qui viennent d'être déterminés, établit si la ligne d'abonné est défectueuse.

2. Agencement de circuit selon la revendication 1, caractérisé en ce que le filtre numérique de l'annuleur d'écho (24) est un filtre récursif.

3. Agencement de circuit selon la revendication 1, caractérisé en ce que le filtre numérique de l'annuleur d'écho (24) est un filtre transversal.

4. Agencement de circuit selon la revendication 1, caractérisé en ce que la mémoire (23, 26) et/ou le circuit d'évaluation (22) sont inclus dans un équipement terminal de groupe d'abonnés (17).

5. Agencement de circuit selon l'une des revendications 1 à 3, caractérisé en ce que la mémoire (25) est contenue dans l'équipement terminal de ligne d'abonné côté central (3).

6. Agencement de circuit selon l'une des revendications 1 à 3, caractérisé en ce que la mémoire (30) et le circuit d'évaluation (29) sont contenus dans un équipement de commande et de maintenance (28).

Fig.1

1. 2. 3. 4. 5. 6. 7. 8. 9. 10. 11. 12. 13. 14. 15. 16. 17. 18. 19. 20. 21. 22. 23. 24. 25. 26. 27. 28. 29. 30. 31. 32.

Fig.2

Fig.3

Fig.4